# EUROPEAN PATENT SPECIFICATION

(11) **EP 2 864 427 B1**
(45) Date of publication and mention of the grant of the patent: **06.10.2021**
(21) Application number: 13747943.2
(22) Date of filing: 07.08.2013
(51) Int. Cl.: C09D 5/00

(54) **COATING COMPOSITION WITH BIOCIDE**
BESCHICHTUNGSZUSAMMENSETZUNG MIT EINEM BIOZID
COMPOSITION DE REVÊTEMENT COMPRENANT UN BIOCIDE

(30) Priority: 09.08.2012 US 201261681269 P
(43) Date of publication of application: 29.04.2015
(73) Proprietor: Nutrition & Biosciences USA 2, LLC, Rochester, NY 14623 (US)
(72) Inventor: ASHMORE, John, Lansdale, PA 19446 (US); LAGANELLA, David, Swedesboro, NJ 08085 (US); POLANUYER, Boris, Lansdale, PA 19446 (US)
(74) Representative: Houghton, Mark Phillip
(86) International application number: PCT/US2013/053926
(87) International publication number: WO 2014/025870

(56) References cited:
- WO-A1-00/11949
- WO-A1-99/56542
- WO-A1-2006/032019
- WO-A2-03/053142

## Description

It is often desirable to incorporate a water-insoluble biocide into a coating composition. For example, when the coating composition is a marine anti-fouling coating composition, and a dried coating is made from a layer of the coating composition, the dried coating may be put into contact with seawater, and it is desirable that the water-insoluble biocide is slowly released from the dried coating. It is further desired that the coating composition and the dried coating made therefrom have the characteristics normally required of marine anti-fouling coating compositions and of the dried coatings made therefrom.

US 7,354,596 describes a system for delivering active anti-microbial agents; the system involves a polymer particle containing an active anti-microbial agent. US 7,354,596 describes the system as useful on various portions of buildings and other related structures.

The following is a statement of the invention.

The present invention provides a coating composition comprising (a) one or more binder, (b) and one or more water-insoluble biocide, characterized in that said composition further comprises (c) particles comprising polymer, wherein said particles have specific surface area, measured using the BET method with nitrogen as the adsorbed substance, of 900 m²/g or more.

The following is a detailed description of the invention.

As used herein, the following terms have the designated definitions, unless the context clearly indicates otherwise.

A particle is characterized by its diameter. If the particle is not spherical, its diameter is considered herein to be the diameter of a sphere that has the same volume as the particle.

A collection of particles may be characterized by D50. As used herein, when a collection of particles has D50 of a certain value, then 50 percent of the particles by volume is composed of particles having diameter less than or equal to that certain value.

A collection of particles may also be characterized by its specific surface area, which is measured using the BET method with nitrogen as the adsorbed substance.

A compound is water-insoluble if the maximum amount of that compound that will dissolve in 100 g of water at 25°C is 0.1 g or less. A compound is water-soluble if the amount of that compound that will dissolve in 100 g of water at 25°C is more than 1 g.

A biocide is a compound that is capable of inhibiting the growth of, or killing, one or more species of bacteria, fungus, algae, or marine fouling organisms. Marine fouling organisms tend to grow on surfaces that are submerged under water and include hard and soft fouling organisms, including algae, tunicates, hydroids, bivalves bryozoans, polychaete, worms, sponges, and barnacles.

A coating composition has the following characteristics: it is a liquid composition, which means that it is in the liquid state at a range of temperatures that includes 0°C to 50°C. A coating composition contains a continuous liquid medium; the coating binder(s), the pigment particles, and optional further ingredients that are dissolved or dispersed in the continuous liquid medium. Solid materials present in the coating composition are not considered herein to be part of the continuous liquid medium even if they are dissolved in the continuous liquid medium. Materials present in the coating composition are considered solid if they are present in the container at the conclusion of the following procedure: a sample of coating composition is placed into an open container and heated in a normal atmosphere at 100°C for sufficient time for volatile ingredients to evaporate, until the weight of the sample does not change appreciably over time.

A coating composition is "solvent borne" if the continuous liquid medium contains 25% or less water, by weight based on the weight of the continuous liquid medium.

A coating binder is a substance that is capable of forming a film; that is, when the binder is present in a liquid coating composition, when that composition is applied as a layer on a substrate and then dried or allowed to dry at ambient temperature (which may be any temperature from 0°C to 45°C) to form a dry coating, the binder is capable of forming a continuous film in that dry coating.

A pigment is a particulate solid. A pigment is solid over a temperature range that includes the range -10°C to 95°C. Typical pigments are either carbon black or are inorganic compounds. Inorganic pigments typically have specific surface area of less than 200 m²/g.

A coating composition is capable of being applied as a layer on the surface of a substrate and capable of forming a dry layer (the "dry coating") that adheres to the surface of the substrate. A marine coating composition is a coating composition that is capable of forming a dry coating on the surface of a marine object. After formation of the dry coating, the dry coating will adhere to the surface for a usefully long time, even when some or all of the coated surface remains under water for significant amounts of time (i.e., at least one hour per day). Marine objects are those that are put to use in environments in which some or all of the object is under water for significant amounts of time. Examples of marine objects include ships, piers, docks, pilings, fishnets, heat exchangers, dams, and piping structures, such as intake screens.

A marine coating composition that is capable of forming a dry coating that is effective at inhibiting the growth of one or more marine fouling organism is a marine anti-fouling (MAF) coating composition. A marine anti-foulant is a biocide that is added to a marine coating composition and that improves the ability of the marine coating composition to inhibit the growth of one or more marine fouling organism. A marine anti-fouling coating composition contains a continuous liquid medium, one or more binder, one or more pigment, one or more marine anti-foulant, and optionally one or more adjuvant.

A composition that is "dry" or "dried" has total volatile compound content of 5% or less by weight based on the weight of the composition. Volatile compounds have boiling point at 1 atmosphere pressure of 200°C or below.

A "polymer" is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof.

Some polymers are fully crosslinked. The molecular weight of fully crosslinked polymers cannot be measured. Fully crosslinked polymers are considered to have infinite Mw and are considered to be insoluble in water and solvents. The swell ratio of a fully crosslinked polymer may be measured as follows: a solvent is identified that is compatible with an un-crosslinked polymer of composition similar to the crosslinked polymer of interest; a sample of the crosslinked polymer (weight W0) is mixed with a relatively large amount of the solvent at 25°C and allowed to reach equilibrium; the crosslinked polymer (possibly swollen with some of the solvent) is mechanically separated from the free liquid solvent (for example, by centrifugation or filtration or other methods); W1 is the weight of the resulting crosslinked polymer sample; swell ratio is the quotient W1/W0.

Molecules that can react with each other to form the repeat units of a polymer are known herein as "monomers." Vinyl monomers have structure I:

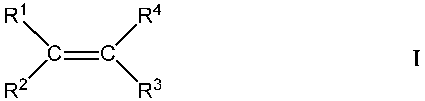

R¹, R², R³, and R⁴ is each independently either hydrogen or an organic group. Vinyl monomers include, for example, (meth)acrylate monomers, vinyl aromatic monomers, olefin monomers, and vinyl esters. (Meth)acrylate monomers are acrylic acid, methacrylic acid, substituted or unsubstituted esters thereof, and substituted or unsubstituted amides thereof. Vinyl aromatic monomers have one or more of R¹, R², R³, and R⁴ that contains one or more aromatic ring, and a carbon atom within an aromatic ring is connected by a covalent single bond to one of the carbon atoms in the carbon-carbon double bond shown in structure I. Vinyl aromatic monomers include, for example, styrene, alpha-substituted styrenes, ring-substituted styrenes (including, for example, divinyl benzene), and mixtures thereof. Olefin monomers are hydrocarbon compounds having one or more carbon-carbon double bond. Vinyl esters are esters of carboxylic acids with vinyl alcohol.

Vinyl monomers are capable of undergoing vinyl polymerization to form vinyl polymers.

Acrylic polymers are polymers that contain 50% or more by weight polymerized units of acrylic monomers. Acrylic resin acids are acrylic polymers that contain 50% or more by weight acrylic acid, methacrylic acid, or a mixture thereof. Acrylic resin acid salts are acrylic resin acids, in which 50% or more on a molar basis of the carboxylic acid groups are in the anion form.

Seawater is water from a sea or ocean. On average, seawater in the world's oceans has a salinity of about 3.5 wt% and an average density at the ocean surface of 1.025 g/ml. Artificial seawater is a mixture of water with dissolved mineral salts that simulates seawater. An example of artificial seawater is synthetic seawater available from Ricca™ (ASTM D1141).

The coating composition of the present invention is preferably a solvent borne coating composition. The preferred amount of water in the solvent borne coating composition is 10% or less; more preferably 5% or less; more preferably 2% or less.

Preferably the continuous liquid medium contains one or more compound selected from aliphatic compounds (such as mineral spirits), aromatic compounds, alkyl-substituted aromatic compounds (such as xylene, Solveso solvents, and Aromatic 100 and Aromatic 150 solvents), ketones (such as methyl isobutyl ketone and methyl isoamyl ketone), alcohols (such as n-butanol and propylene glycol methyl ethers), and mixtures thereof.

In the coating composition of the present invention, the total amount of solid material is preferably, by weight based on the weight of the coating composition, 80% or less. The total amount of solid material is preferably, by weight based on the weight of the coating composition, 50% or more; more preferably 55% or more; more preferably 60% or more.

The total amount of water in the coating composition of the present invention is preferably, by weight based on the weight of the coating composition, 5% or less; more preferably 2% or less; more preferably 1% or less.

Preferred biocides are water-insoluble derivatives of 4-isothiazolin-3-one, tolylfluanid, dichlofluanid, diiodomethyl-p-tolylsulfone (DIMTS), 2-methylthio-4-tert-butylamino-6-isopropylamino-s-triazine, spinosad, spinetoram, medetomidine, cypermethrin, tralopyr, and mixtures thereof. More preferred are water-insoluble derivatives of 4-isothiazolin-3-one and mixtures thereof. More preferred is 4,5-dichloro-2-n-octyl-4-isothiazolin-3-one (DCOIT).

Preferred binders are soluble in the continuous liquid medium of the coating composition. Preferred binders contain one or more polymer. Preferred polymers contained in the binder are fluoropolymers, silicone polymers, silicone acrylic polymers, acrylic resin acid salts, and mixtures thereof. More preferred polymers contained in the binder are fluoropolymers, silicone polymers, and mixtures thereof; more preferred are silicone polymers. In some embodiments, binders contain one or more rosin in addition to one or more polymer When rosins are present, preferred rosins include unmodified rosin and alkylated rosin esters.

Preferred pigments have D50 of the particles of 0.1 micrometer to 10 micrometer.

Compositions of the present invention are preferably marine coating compositions; more preferably are marine anti-fouling coating compositions.

The preferred total amount of all binder is, by weight based on the total weight of the composition, 5% or more; more preferably 10% or more. When one or more binder is present, the preferred total amount of all binder is, by weight based on the total weight of the composition, 30% or less; more preferably 25% or less.

Preferably the coating composition of the present invention further contains one or more pigment. A pigment is present in the form of particles, which may be spherical, approximately spherical, irregularly rounded, roughly rectangular, sheetlike, lamelliform, needlelike, bristlelike, threadlike, or a combination thereof. A pigment may be organic (for example, polymeric) or inorganic (for example, oxides, carbonates, clays, etc.).

When one or more pigment is present, the preferred total amount of pigment is, by weight based on the total weight of the composition, 20% or more; more preferably 40% or more. When one or more pigment is present, the preferred total amount of pigment is, by weight based on the total weight of the composition, 75% or less; more preferably 65% or less.

The coating composition of the present invention optionally further contains one or more adjuvant. Some adjuvants include, for example, dispersants, coalescents, thickeners, colorants, waxes, additional biocides, and mixtures thereof. Preferred are compositions that contain adjuvants that are suitable for use in marine anti-fouling paints.

Optionally, the coating composition may contain one or more co-biocide in addition to the water-insoluble biocide. If a co-biocide is present, the co-biocide is preferably chosen from the group consisting of zinc pyrithione, copper pyrithione, dichlorophenyl dimethyl urea, zinc, bis(N,N-dimethylcarbamodithioato-kS,kS')[m-[[N,N'-1,2-ethanediylbis [carbamodithioato-kS,kS']](2-)]]di- (TOC 3204F), zinc ethane-1,2-diylbis(dithiocarbamate) (Zineb), cuprous oxide, cuprous thiocyanate, TPBP, and mixtures thereof.

The coating composition of the present invention is preferably used as an anti-fouling coating; more preferably as a marine anti-fouling coating composition.

A coating method includes applying a layer of the coating composition of the present invention to a substrate. The thickness of the layer is preferably chosen so that the dry film thickness will be 50 micrometers or more. The thickness of the layer is preferably chosen so that the dry film thickness will be 1 millimeter or less; more preferably 500 micrometers or less; more preferably 300 micrometers or less.

The coating composition of the present invention contains particles (herein called "particles (c)." Particles (c) contain polymer, and the collection of particles (c) has D50 of larger than 1 micrometer and has specific surface area of 900 m²/g or more.

Particles (c) preferably contain one or more vinyl polymer. Preferred vinyl polymers contain polymerized units of monomers having any atom of nitrogen, oxygen, sulfur, or any halogen in the amount of 0-5%; more preferably 0-2%; more preferably 0-2%; more preferably 0-1%; more preferably 0%.

Preferred vinyl polymers contain one or more polymerized units of one or more vinyl aromatic monomer. Preferred vinyl aromatic monomers have no atoms other than carbon and hydrogen. Preferably the amount of polymerized units of vinyl monomers in the vinyl polymer is, by weight based on the weight of the vinyl polymer, 75% or more; more preferably 90% or more; more preferably 98% or more; more preferably 100%. Preferred vinyl aromatic monomers are styrene, divinyl benzene, and mixtures thereof.

In the particles (c) prior to being mixed with the other ingredients of the coating composition, the preferred amount of vinyl polymer, by weight based on the weight of particles (c), is 75% or more; more preferably 85% or more; more preferably 95% or more; more preferably 99% or more.

Preferred vinyl polymers are fully crosslinked. Preferably, the amount of polymerized units of monomers that contain two or more polymerizable carbon-carbon double bonds is 10% or more; more preferably 50% or more; more preferably 75% or more; more preferably 90% or more.

Preferably particles (c) have swell ratio of 20% or lower; more preferably 10% or lower; more preferably 5% or lower; more preferably 2% or lower; more preferably 1% or lower.

The collection of particles (c) preferably has D50 of 0.1 micrometer or larger. The collection of particles (c) preferably has D50 of 100 micrometer or smaller; more preferably 50 micrometer or smaller; more preferably 20 micrometer or smaller, more preferably 15 micrometer or smaller.

The particles (c) have specific surface area of 900 m²/g or more; preferably 950 m²/g or more. The particles (c) preferably have specific surface area of 2,000 m²/g or less.

Preferably, prior to being mixed with the other ingredients of the coating composition, the amount of water in the collection of particles (c), by weight based on the weight of the collection of particles (c), is 5% or less; more preferably 2% or less.

In the coating composition of the present invention, it is contemplated that some or all of the water-insoluble biocide will adsorb onto the surface of the particles (c).

The amount of particles (c) in the coating composition is preferably, by weight based on the weight of the coating composition, 30% or less; more preferably 20% or less. The amount of particles (c) in the coating composition is preferably, by weight based on the weight of the coating composition, 1% or more; more preferably 2% or more.

It is known that some water-insoluble biocides, when added to coating compositions, can plasticize the binder. This phenomenon is reported, for example, in US 7,377,968. When the binder is plasticized, the coating may be slow to dry; the dry coating may lack strength, and/or the dry coating may release biocide too quickly. It is contemplated that, in the present invention, the tendency of the water-insoluble biocide to plasticize the binder will be reduced or eliminated because the water-insoluble biocide is fully or partially adsorbed onto the surface of the particles (c).

In the past, one approach to controlling the release of water-insoluble biocide was to encapsulate the water-insoluble biocide, for example in a urea-formaldehyde resin. It is contemplated that such encapsulation determines the release rate. That is, once the water-insoluble biocide has been encapsulated, it is not possible to significantly alter the release rate of the biocide from the dry coating by varying the composition of the coating. If a different release rate is desired, a different capsule must be designed.

In the practice of the present invention, it is contemplated that the release rate of the water-insoluble biocide may be adjusted by adjusting the ratio of water-insoluble biocide to particles (c)

Preferably, in the composition of the present invention, the water-insoluble biocide is not encapsulated. Preferably, no resin that is a condensation product of formaldehyde with any formaldehyde-reactive substance is present in the composition of the present invention.

The following are examples of the present invention.

The following sorbents were used in the following examples. All sorbents had D50 greater than 1 micrometer. Each sorbent was used as obtained commercially, except that, if the sorbent had D50 of larger than 50 micrometers, it was milled until D50 was less than 50 micrometers.

| **name** | **description** | **supplier** |
|---|---|---|
| V503 | DOWEX™ OPTIPORE™ V503 Adsorbent | Dow Chemical Company |
| XAD-4 | AMBERLITE™ XAD™ 4 Adsorbent | Dow Chemical Company |
| XAD-7 | AMBERLITE™ XAD™ 7 Adsorbent | Dow Chemical Company |
| SP-850 | SEPABEADS™ SP-850 Adsorbent | Supelco |
| HR-P | CHROMABOND™ HR-P Adsorbent | Macherey-Nagel GmbH. |

GERSTEL Twister™ polydimethylsiloxane (PDMS) coated stir bars were purchased from Gerstel Gmbh.

The paints used were Interlux Micron™ 66 paint ("M66"), Intersleek™ 970 paint ("P970") and Intersleek™ 731 ("P731"), obtained commercially and mixed according to manufacturer's directions, except for the addition of DCOIT as described below.

Paint was mixed with DCOIT and adsorbent using orbital shaker (Red Devil Inc, USA) and applied on a Leneta paper or aluminum foil using a stainless steel gauge (wet film thickness 500 micrometer). Paint was dried overnight.

Paper on an appropriate support (20-40 sq.cm of paint surface) was immersed into 120 ml glass bottle containing 100 ml of artificial seawater, Twister stirring bar was inserted, and the bottle was placed on a stirring mixer. The stirring rate was 600 rpm. At day1, 4, 7, 14, and 21, Twister bars were removed from bottles, wiped with paper towel and placed into HPLC vials containing 1 ml of acetonitrile. Adsorbed biocide was extracted at 35C for 30 min. After extraction bars were wiped again and returned back to a bottles with seawater/MAF paint. The concentration of biocides was measured by HPLC.

Agilent 1200 HPLC equipped with autosampler, column heater and diode-array detector was controlled by Chemstation software. DCOIT was analyzed using Ultra C18 column 150x4.6cm (Restek Inc). The same isocratic conditions (70% acetonitrile, 2.3 ml/min) were used. DCOIT was detected at 280 nm.

External standard technique was used for quantization of released biocides. Twister stirring bar capacity was estimated as 400 micrograms based on previous calibrations.

Cumulative release of DCOIT is reported in weight percent, based on the weight of DCOIT in the coating composition.

Example 1: Results in MAF paint with fluoropolymer binder (P970).

Coating compositions were prepared and tested as described above by adding DCOIT (1% by weight based on the weight of the coating composition) and adsorbent (4% by weight based on the weight of the coating composition to the paint (P970).

**Results in MAF Paint with Fluoropolymer Binder Cumulative Release of DCOIT (%)**

| Adsorbent | Type | SSA(²) (m²/g) | Comment | Day 14 | Day 21 |
|---|---|---|---|---|---|
| V503 | Styrenic | 1,100 | | 1.12 | 1.37 |
| XAD-4 | Polyaromatic | 724 | comparative | 4.59 | 5.13 |
| XAD-7 | Acrylic Ester | 450 | comparative | 2.98 | 3.74 |
| SP-850 | Sty/DVB⁽¹⁾ | 930 | | 4.34 | 5.46 |
| none | None | none | comparative | 9.55 | 11.4 |

| | | | | | |
|---|---|---|---|---|---|
| Note (1): Copolymer of Styrene and divinyl benzene. Note (2): specific surface area. | | | | | |

The best performance was shown by the paints containing SP-850 and V503; these adsorbents were made with vinyl aromatic monomer and had SSA larger than 900 m²/g.

Example 2: Results in MAF paint with silicone binder (P731).

Coating compositions were prepared and tested as described above by adding DCOIT (1% by weight based on the weight of the coating composition) and adsorbent (4% by weight based on the weight of the coating composition to the paint (P731).

**Results in MAF Paint with Silicone Binder Cumulative Release of DCOIT (%)**

| Adsorbent | Type | SSA (m²/g)⁽²⁾ | Comment | Day 14 | Day 21 |
|---|---|---|---|---|---|
| V503 | Styrenic | 1,100 | | 1.41 | 1.71 |
| XAD-4 | Polyaromatic | 724 | comparative | 4.40 | 4.43 |
| XAD-7 | Acrylic Ester | 450 | comparative | 5.75 | 5.75 |
| HR-P | Sty/DVB⁽¹⁾ | 1,200 | | 0.77 | 0.86 |
| None | None | none | comparative | 5.47 | 5.47 |

| | | | | | |
|---|---|---|---|---|---|
| Note (1): Copolymer of Styrene and divinyl benzene. Note (2): specific surface area. | | | | | |

The best performance was shown by the paints containing HR-P and V503; these adsorbents were made with vinyl aromatic monomer and had SSA larger than 1,000 m²/g.

Example 3: Results in MAF paint with acrylic resin acid salt binder (M66)

Coating compositions were prepared and tested as described above by adding DCOIT (1% by weight based on the weight of the coating composition) and various amounts of V503 to the paint (M66).

**Results in MAF Paint with Metal Acrylate Binder (M66) Cumulative Release of DCOIT (%)**

| Ratio⁽³⁾ | Day 14 | Day 21 |
|---|---|---|
| zero | 6.48 | 9.35 |
| 2 to 1 | 5.02 | 7.12 |
| 4 to 1 | 4.56 | 6.56 |
| 6 to 1 | 3.31 | 4.78 |

| | | |
|---|---|---|
| Note (3): weight ratio of V503 to DCOIT. | | |

Paints containing V503 performed better than the paint without V503. In general, the higher the level of V503, the more retarded was the release of DCOIT. This result shows that the ratio of adsorbent to water-insoluble biocide may be used to adjust the rate of release of the water-insoluble biocide as desired.

## Claims

1. A coating composition comprising
(a) one or more binder, and
(b) one or more water-insoluble biocide,
**characterized in that** said composition further comprises (c) particles comprising polymer, wherein said particles have specific surface area, measured using the BET method with nitrogen as the adsorbed substance, of 900 m²/g or more.

2. The coating composition of claim 1, wherein the specific surface area of said particles is 950 m²/g or more.

3. The coating composition of claim 1, wherein said polymer comprises 90% or more polymerized units of vinyl aromatic monomer, by weight based on the weight of said polymer.

4. The coating composition of claim 3, wherein said vinyl aromatic monomer comprises 10% or more multifunctional vinyl aromatic monomer, by weight based on the total weight of all said vinyl aromatic monomers.

5. The coating composition of claim 4, wherein the specific surface area of said particles is 950 m²/g or more.

6. The coating composition of claim 1, wherein the amount of water in said coating composition is 5% or less by weight based on the weight of said coating composition.

7. The coating composition of claim 1, wherein said particles have D50 of 50 micrometers or less.

## Patentansprüche

1. Beschichtungszusammensetzung umfassend
(a) ein oder mehrere Bindemittel und
(b) ein oder mehrere wasserunlösliche Biozide,
**dadurch gekennzeichnet, dass** die Zusammensetzung ferner (c) Teilchen umfasst, die Polymer umfassen, wobei die Teilchen einen spezifischen Oberflächenbereich, unter Anwendung des BET-Verfahrens mit Stickstoff als adsorbierte Substanz gemessen, von 900 m²/g oder mehr aufweisen.

2. Beschichtungszusammensetzung nach Anspruch 1, wobei der spezifische Oberflächenbereich der Teilchen 950 m²/g oder mehr beträgt.

3. Beschichtungszusammensetzung nach Anspruch 1, wobei das Polymer gewichtsmäßig 90 % oder mehr polymerisierte Einheiten von vinylaromatischem Monomer, auf das Gewicht des Polymers bezogen, umfasst.

4. Beschichtungszusammensetzung nach Anspruch 3, wobei das vinylaromatische Monomer gewichtsmäßig 10 % oder mehr multifunktionelles vinylaromatisches Monomer, auf das Gesamtgewicht aller vinylaromatischen Monomere bezogen, umfasst.

5. Beschichtungszusammensetzung nach Anspruch 4, wobei der spezifische Oberflächenbereich der Teilchen 950 m²/g oder mehr beträgt.

6. Beschichtungszusammensetzung nach Anspruch 1, wobei die Menge an Wasser in der Beschichtungszusammensetzung gewichtsmäßig 5 % oder weniger, auf das Gewicht der Beschichtungszusammensetzung bezogen, beträgt.

7. Beschichtungszusammensetzung nach Anspruch 1, wobei die Teilchen eine D50 von 50 Mikrometern oder weniger aufweisen.

## Revendications

1. Composition de revêtement comprenant
(a) un ou plusieurs liants, et
(b) un ou plusieurs biocides insolubles dans l'eau,
**caractérisée en ce que** ladite composition comprend en outre (c) des particules comprenant un polymère, lesdites particules ayant une surface spécifique, mesurée en utilisant le procédé B.E.T. avec de l'azote comme substance adsorbée, de 900 m²/g ou plus.

2. Composition de revêtement selon la revendication 1, la surface spécifique desdites particules étant de 950 m²/g ou plus.

3. Composition de revêtement selon la revendication 1, ledit polymère comprenant 90 % ou plus d'unités polymérisées de monomère de vinyle aromatique, en poids sur la base du poids dudit polymère.

4. Composition de revêtement selon la revendication 3, ledit monomère de vinyle aromatique comprenant 10 % ou plus de monomère de vinyle aromatique multifonctionnel, en poids sur la base du poids total de tous lesdits monomères de vinyle aromatiques.

5. Composition de revêtement selon la revendication 4, la surface spécifique desdites particules étant de 950 m²/g ou plus.

6. Composition de revêtement selon la revendication 1, la quantité d'eau dans ladite composition de revêtement étant de 5 % ou moins en poids sur la base du poids de ladite composition de revêtement.

7. Composition de revêtement selon la revendication 1, lesdites particules ayant une D50 de 50 micromètres ou moins.
